# FASCICULE DE BREVET EUROPEEN

(11) **EP 0 386 382 B1**
(45) Date de publication et mention de la délivrance du brevet: **12.05.1993**
(21) Numéro de dépôt: 89403538.5
(22) Date de dépôt: 19.12.1989
(51) Int. Cl.: C03B 19/10, C03B 23/023, C03B 21/00, B02C 19/00

(54) **Evacuation des volumes défectueux dans une installation de bombage trempe de feuilles de verre**
Räumung von beschädigten Mengen in einer Vorrichtung zum Biegen und Härten von Glasscheiben
Removal of defective quantities in an installation for bending and tempering glass sheets

(30) Priorité: 09.03.1989 FR 8903076
(43) Date de publication de la demande: 12.09.1990
(73) Titulaire: SAINT-GOBAIN VITRAGE INTERNATIONAL, 92400 Courbevoie (FR)
(72) Inventeur: Mathivat, Denis, F-60150 Thourotte (FR); Petitcollin, Jean-Marc, F-60150 Thourotte (FR); Machura, Christophe, F-60150 Chevincourt/Thourotte (FR)
(74) Mandataire: Menes, Catherine

(56) Documents cités:
- DE-A- 2 648 269
- DE-B- 2 700 500
- FR-A- 1 413 919
- FR-A- 2 053 664
- SU-A- 477 953
- US-A- 3 407 053
- US-A- 3 970 254
- US-A- 4 329 164

## Description

L'invention se rapporte aux techniques de formage de feuilles de verre pour la fabrication de vitrages bombés destinés notamment aux véhicules automobiles. L'invention concerne un procédé et un dispositif d'évacuation des volumes défectueux dans une installation de bombage en position horizontale.

Les installations de mises en oeuvre de procédés de bombage dits horizontaux sont généralement constituées par un four tunnel muni d'un convoyeur à rouleaux, une station de bombage et une station attenante de refroidissement comportant un dispositif de trempe thermique ou de recuisson. Les feuilles de verre sont chargées une à une à l'entrée du four et acheminée par le convoyeur jusqu'à la station de bombage où s'opère le formage puis - ou éventuellement pendant le formage même - elles sont transférées par exemple sur un cadre de trempe sur lequel elles sont conduites à la station de refroidissement soit par exemple entre les caissons de soufflage de la station de trempe.

Toutefois, et même si les rendements de production de telles installations sont souvent bien supérieurs à 90 %, certaines des feuilles de verre ne subissent pas l'ensemble du processus de bombage et ne peuvent donc être correctement transférées sur le cadre de trempe. Ces feuilles de verre - que nous qualifierons par la suite de volumes défectueux - sont par exemple toutes celles éliminées lors des périodes de redémarrage et de réglage de l'installation notamment du four, des outils de bombage et des caissons de trempe ou du four de recuisson. Les volumes défectueux au sens de l'invention peuvent donc éventuellement ne présenter aucun défaut intrinsèque et ont été simplement produits au mauvais moment. Le défaut peut par ailleurs être intrinsèque au volume. Il en est ainsi d'une feuille de verre qui pour une raison quelconque n'a pas été prise en charge par les outils de bombage et reste sur le convoyeur qui assure les mouvements du verre à son entrée dans la station de bombage jusqu'à son positionnement correct par rapport aux outils de bombage . Il en est de même des feuilles de verre dont la température est un peu trop basse pour la vitesse de déformation imposée lors du bombage, ce qui peut entraîner la casse du verre.

Il va de soi que tous ces volumes défectueux doivent être évacués pour ne pas gêner le traitement des autres feuilles de verre.

Dans les installations dites à sorties latérales dans lesquelles le cadre de trempe - posé sur un chariot approprié - se déplace sur des rails perpendiculaires à l'axe du four, l'évacuation des volumes défectueux s'obtient en prolongeant le convoyeur à rouleaux jusqu'à l'extrémité de la station de bombage de sorte que les feuilles de verre non prises en charge par les outils de bombage continuent leur déplacement et viennent finalement tomber dans une fosse à calcin prévue en bout de ligne dans l'axe du convoyeur.

Mais pour de nombreuses raisons, souvent déterminées par la surface disponible pour une implantation, on peut choisir une installation à sortie en ligne dans laquelle la station de refroidissement telle la station de trempe est placée dans le prolongement de l'axe du four. Un convoyeur latéral d'évacuation pourrait éventuellement être envisagé mais cela supposerait un équipement de détection des volumes défectueux suffisamment fiable pour commander le fonctionnement de ce convoyeur d'évacuation seulement lorsqu'un volume est réellement défectueux - mais bien sûr de façon systématique pour chaque volume défectueux. Il est aussi connu de prolonger le convoyeur à rouleaux par un système de simples chaînes passant entre les caissons de soufflage de la station de trempe sur lesquelles sont évacués les volumes défectueux. Ce système d'évacuation par chaînes ne peut toutefois fonctionner de façon satisfaisante que si les caissons de soufflage sont plats ou seulement très légèrement bombés selon des courbures cylindriques complémentaires. Il devient totalement inopérant pour des caissons de soufflage en forme adaptés à la trempe de feuilles de verre d'une forme complexe, tout simplement du fait qu'il n'est alors plus possible de faire pénétrer une feuille de verre plan entre des caissons de soufflage courbes, sauf à escamoter les caissons de soufflage ce qui complique l'installation.

D'autre part, intercaler une fosse à calcin entre la station de bombage et la station de refroidissement notamment de trempe signifie un allongement du temps de transfert entre ces deux stations, allongement préjudiciable à la qualité du bombage, car il favorise des déformations indésirables du type double-bombage et à la qualité de la trempe car les feuilles de verre arrivent plus froides entre les caissons de soufflage de trempe - ce dernier point étant plus particulièrement critique lors de la fabrication de vitrages à forme complexe pour lesquels on a déjà tendance à minimiser la température de sortie après l'opération de bombage pour éviter des défauts de bombage.

Il est connu du brevet US-A-3 407 053 de fabriquer de la poudre de verre à partir de plaques portées à températures élevées et sur lesquelles on pulvérise des gouttelettes d'eau qui, en se vaporisant à la surface de la feuille de verre, constituent un réseau très dense de lignes de fracture, entraînant ainsi la décomposition spontanée de la plaque, sans intervention de forces mécaniques à l'exception éventuelle d'un dispositif vibrateur qui adie à amorcer la décomposition. Ce document ne concerne donc pas le problème technique de l'évacuation des volumes défectueux pendant la trempe. Par ailleurs, la technique enseignée par ce document prévoit de continuer le refroidissement du verre après la pulvérisation de sorte qu'a priori, le procédé ne convient pas pour une installation de très petites dimensions.

L'invention a pour but un système d'évacuation des volumes défectueux dans une installation de bombage en position horizontale dont l'encombrement extrêmement faible permette la disposition entre les stations de bombage et de refroidissement notamment de trempe sans préjudice pour la qualité finale des vitrages fabriqués.

L'invention propose un procédé d'évacuation des volumes défectueux produits lors d'un traitement de feuilles de verre selon lequel les feuilles de verre sont échauffées dans un four, acheminées en position horizontale dans une station de bombage où elles doivent être prises en charge par des outils de bombage puis transportées dans une station de refroidissement notamment de trempe, les volumes défectueux étant évacués à l'extrémité de la station de bombage, et dans ce but sont fissurés par pulvérisation d'un fluide froid puis broyés.

L'invention consiste ainsi dans une application du procédé connu à l'évacuation des volumes défectueux notamment du brevet US-3 407 053, en complétant de plus l'opération par un broyage pour accélérer la casse des volumes.

La pulvérisation du fluide froid - par exemple de l'eau - a lieu de préférence alors que les feuilles de verre sont en mouvement sur un convoyeur d'évacuation, immédiatement avant d'être broyées. De cette façon, même les volumes de grandes dimensions peuvent être réduits en fins morceaux sur une longueur très courte qui n'excède pas par exemple 300 mm. Ce très faible encombrement permet de loger facilement le système d'évacuation selon l'invention entre une station de trempe et une station de bombage disposées dans l'alignement du four de réchauffage des feuilles de verre.

Eventuellement, le système d'évacuation a son fonctionnement tout ou en partie déclenché par la détection de la présence d'un volume défectueux. La détection peut ainsi commander la pulvérisation du fluide froid et la mise en place du système de broyage qui est éclipsé entre deux interventions afin de ne pas gêner les mouvements des feuilles de verre correctement bombées, ou encore la mise en route des moyens de broyage.

Une telle détection n'est toutefois pas indispensable si le système d'évacuation selon l'invention est avantageusement appliqué à une ligne de production de feuilles de verre bombées-trempées pour laquelle le niveau des feuilles de verre dans la station de trempe est différent du niveau des feuilles de verre lors de leur acheminement dans le four. Dans ce cas, on fait de préférence fonctionner de façon permanente le système d'évacuation des feuilles de verre - qui trouve par définition sa place au niveau du convoyeur du four qui forme généralement le niveau inférieur - son fonctionnement ne pouvant perturber le traitement des feuilles de verre correctement bombées qui sont déplacées à un niveau supérieur.

L'invention a également pour objet, la mise en oeuvre du procédé par un dispositif d'évacuation des volumes défectueux équipant une installation de bombage en position horizontale comportant un four de réchauffage des feuilles de verre muni d'un convoyeur, une station de bombage et une station de refroidissement notamment de trempe, les feuilles de verre bombées étant transférées à la station de refroidissement par un dispositif de transport par exemple du type cadre de trempe. Ce dispositif d'évacuation situé dans l'axe du four, à l'extrémité de la station de bombage et alimenté par un convoyeur prolongeant le convoyeur du four est essentiellement constitué d'au moins une rampe de pulvérisation d'un fluide froid et de moyens de broyage du verre. Comme moyens de broyage, on peut avantageusement utilisé un concasseur ou un outil de martelage tel une herse déplacée verticalement et alternativement. Le concasseur est par exemple formé d'un rouleau mû en rotation et pourvu de dents. Si nécessaire - notamment si le dispositif équipe une ligne de production dont les niveaux d'acheminement du verre et de trempe des feuilles bombées ne sont pas suffisamment espacés - les moyens de broyage tels le rouleau concasseur sont montés sur un équipage mobile par exemple verticalement permettant de les éclipser entre deux volumes défectueux et de laisser le passage libre par exemple pour le cadre de trempe. Dans ce cas, le système d'évacuation est nécessairement pourvu d'un dispositif de détection de la présence d'un volume défectueux non pris en charge par les outils de bombage. Ce dispositif de détection - qui peut être notamment du type décrit dans le brevet EP-A-217 708 - sert alors à commander le début de la pulvérisation du fluide froid et la remontée de l'équipage mobile.

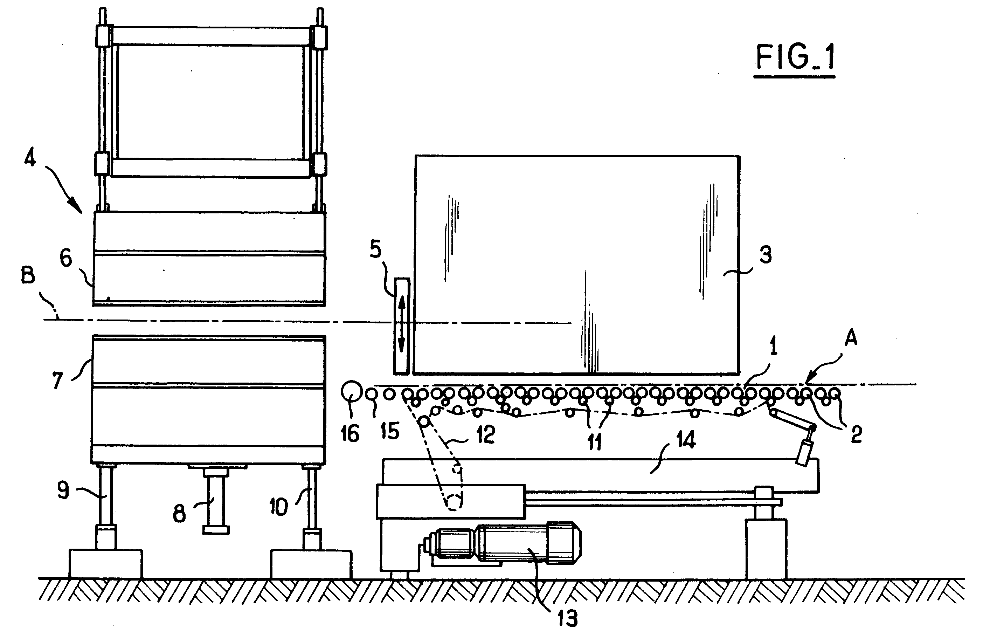

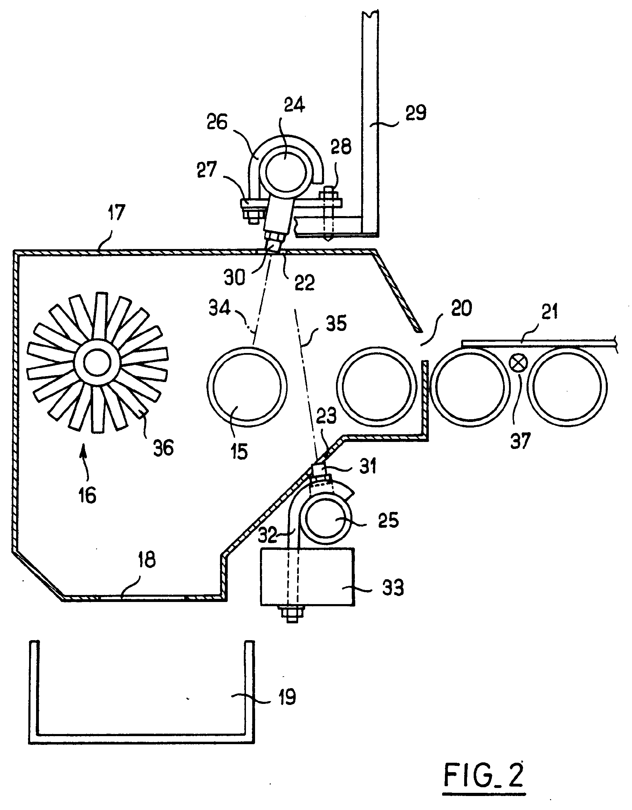

D'autres détails et caractéristiques avantageuses de l'invention sont décrits ci-après en référence aux dessins annexés qui représentent :
. **figure 1** : un schéma d'implantation d'une installation de bombage-trempe en ligne équipée d'un système d'évacuation des volumes défectueux selon l'invention,
. **figure 2** : un agrandissement du système d'évacuation des volumes défectueux visible à la figure 1.

L'installation de bombage-trempe schématisée à la figure 1 comporte un four pour le réchauffement une à une des feuilles de verre et ici non représenté. Les feuilles de verre sont acheminées au travers du four par un convoyeur 1 par exemple à rouleaux 2 dont le niveau de référence est montré par la ligne discontinue A. A la suite du four, les feuilles de verre échauffées à leur température de trempe et de bombage pénètrent dans la station de bombage 3. Cette station de bombage 3 comporte par exemple un ensemble porte outillage muni d'un système de relevage. Cet outillage est par exemple constitué par une forme de bombage supérieure entourée d'un caisson de dépression connecté à un dispositif approprié d'aspiration, ladite forme de bombage étant relevée et abaissée au cours d'un cycle de bombage par exemple au moyen de chaînes fixées sur l'ensemble porte outillage. Des exemples d'outils de bombage et de procédés de bombage utilisant de tels procédés sont par exemple décrits dans les demandes de brevets EP 240 418 et EP 241 355.

Un cadre par exemple de trempe recueille les feuilles de verre après leur bombage. Le cadre se déplace selon un niveau B bien supérieur au niveau A qui est le niveau de de pénétration des feuilles de verre dans la station de bombage 3. Une fois déposée sur le cadre de trempe la feuille de verre est conduite à la station de trempe 4 après ouverture de la porte 5.

Cette station de trempe 4 est constituée de deux caissons de soufflage 6 et 7, montés sur un vérin 8 et guider par des coulisses 9,10 de façon à écarter les caissons pour tout entretien. Des conduites ici non représentées sont prévues pour l'alimentation en gaz de soufflage. Le niveau moyen de verre dans la station de trempe 4 est le niveau B ; l'expression "niveau moyen" rappelle que la feuille de verre est alors bombée selon une forme plus ou moins complexe et qu'en fait les deux caissons de soufflage ont une forme conforme à la surface de la feuille de verre bombée.

Si on revient maintenant à la station de bombage 3, on note qu'elle comporte sous l'ensemble porte outillage un convoyeur 1, prolongement du convoyeur d'acheminement au travers du four. Ce convoyeur est constitué par des rouleaux 2 posés sur des galets 11 et entraînés par des chaînes 12 entraînées par le moteur 13, l'ensemble étant soutenu par une poutre 14. Tous ces éléments bien connus de l'homme de l'art n'ont été schématisés ici que de manière à donner une idée de l'encombrement des différents organes et de la difficulté qu'il en résulte pour l'implantation d'un dispositif d'évacuation des volumes défectueux. Pour éviter un certain refroidissement du verre qui diminuerait l'efficacité du soufflage de trempe, la station de trempe doit être placée aussi proche que possible de la station de bombage. De ce fait, l'espace disponible à l'extrémité aval 15 du convoyeur 1 est particulièrement réduit et ne permet notamment pas d'y faire tomber tels quels les volumes défectueux. C'est pourquoi, on dote l'installation d'un système d'évacuation que l'on a simplement schématisé ici par le rouleau concasseur 16 et qui est représenté de façon plus détaillée à la figure 2.

Sur cette figure 2, on retrouve l'extrémité avale du convoyeur 1 avec ces 4 derniers rouleaux dont le rouleau extrême 15, ici des rouleaux creux en silice. Le système d'évacuation est entouré d'un carter 17 dont le fond est pourvu d'une trappe 18 pour l'évacuation vers une fosse à calcin 19. Ce carter 17 comporte simplement une ouverture 20 pour l'entrée d'un volume défectueux 21 acheminé par le convoyeur 1 et deux jours 22, 23. Face à ces jours 22, 23 sont montées des rampes de pulvérisation 24 et 25 s'étendant sur toute la largeur du convoyeur 1. La rampe supérieure 24 est fixée par une patte de fixation 26 à une plaque support 27 montée grâce aux boulons 28 sur un appendice de la paroi latérale 29 de la station de bombage. La rampe 24 est munie de buses 30 pour la pulvérisation d'un fluide froid par exemple de l'eau. De façon similaire, la rampe inférieure 25, munie de buses de pulvérisation 31 est fixée par une patte de fixation 32 à un support 33. Ces deux rampes sont équipées de canalisations d'alimentation en eau ici non représentées. Elles émettent de façon permanente des jets d'eau pulvérisée 34, 35. Deux rampes sont ici utilisées mais on peut éventuellement faire fonctionner le système d'évacuation avec une seule rampe.

Lorsque le volume défectueux à sa température de bombage passe entre les jets 34, 35, il est entièrement fissuré du fait du choc thermique extrêmement intense. Toutefois, les morceaux de verre restent positionnés les uns à côté des autres à la façon des éléments d'un puzzle reconstitué. C'est pourquoi le dispositif d'évacuation doit être complété par un dispositif de broyage ici constitué d'un rouleau concasseur 16 muni de dents 36 et mû en rotation par un dispositif ici non représenté. Au contact des dents 36, le verre fissuré éclate en multiples fragments qui retombent dans la fosse 19 en passant par la trappe 18.

Dans une variante préférée de l'invention, on ne prévoit pas de fosse à calcin sous le dispositif d'évacuation mais le calcin est évacué directement (et avec l'eau pulvérisée) par un tapis vibreur incliné . Ce tapis vibreur incliné - ou tout autre dispositif équivalent - supprime toute nécessité d'arrêt pour vidange.

Le carter 17 occupe une longueur de ligne très faible, de préférence inférieure à 300 mm, de sorte que cet ensemble peut dans difficulté être logé dans l'espace disponible entre les stations de bombage et de trempe. Par ailleurs comme l'ensemble d'évacuation est protégé par un carter, la pulvérisation d'eau peut se faire de façon permanente dans une installation à deux niveaux telle que représentée à la figure 1, sans risquer de perturber le traitement des volumes "normaux".

Si on ne souhaite pas faire fonctionner de façon permanente le dispositif d'évacuation, par exemple la période de réglage passée, on équipe la ligne d'un détecteur 37 indiquant le cas échéant la présence d'un volume défectueux à proximité de l'extrémité avale 15. Après une éventuelle temporisation, le détecteur 37 sert alors à commander une ou plusieurs des opérations telles la pulvérisation, la rotation du rouleau concasseur, la mise en marche du tapis vibreur.

Facultatif dans une installation à deux niveaux A et B bien distincts, un tel détecteur 37 devient indispensable dans une installation à un seul niveau car il n'est évidemment pas question de risquer la casse de bons volumes. Dans ce cas le détecteur 37 pourra également commander une opération supplémentaire qui est la mise en place de l'équipage mobile supportant les moyens de broyage qui sont éclipsés lors d'un fonctionnement normal de l'installation.

L'exemple de réalisation décrit précédemment en référence aux figures annexées concerne une installation de bombage-trempe en ligne. Toutefois, le procédé selon l'invention s'applique également à une installation à sortie latérale où se poseraient des problèmes d'encombrement de bout de ligne. Par ailleurs, le procédé d'évacuation selon l'invention n'est nullement limité aux procédés de bombage suivis d'une trempe thermique par soufflage d'air froid et s'applique de même à d'autres procédés de trempe ou de refroidissement notamment dans un four de recuisson.

## Revendications

1. Procédé d'évacuation de volumes défectueux (21) produits lors d'un traitement de feuilles de verre selon lequel les feuilles de verre sont réchauffées, acheminées en position horizontale dans une station de bombage (3) où elles doivent être prises en charge par des outils de bombage puis transportées dans une station de refroidissement notamment de trempe (4), les volumes défectueux (21) étant évacués à l'extrémité de la station de bombage après avoir été fissurés par pulvérisation (34,35) d'un fluide froid puis broyés.

2. Procédé selon la revendication 1, **caractérisé en ce que** le fluide froid est pulvérisé sur des volumes (21) en mouvement.

3. Procédé selon la revendication 1 ou 2, **caractérisé en ce que** la pulvérisation (34,35) est effectuée sur les deux faces des volumes défectueux (21).

4. Procédé selon l'une des revendications précédentes, **caractérisé en ce que** les moyens d'évacuation des volumes défectueux (21) fonctionnent de façon permanente et continue.

5. Procédé selon l'une des revendications 1 à 3, **caractérisé en ce que** les moyens d'évacuation des volumes défectueux (21) ont un fonctionnement intermittent commandé par la détection de la présence d'un volume défectueux (21).

6. Application du procédé d'évacuation selon l'une des revendications 1 à 5, à la réalisation de lignes de production de feuilles de verre bombées comportant successivement dans le même alignement un four de réchauffage des feuilles de verre, une station de bombage (3), un dispositif d'évacuation des volumes défectueux (21) et une station de refroidissement (4).

7. Application du procédé d'évacuation selon l'une des revendications 1 à 5, à la réalisation de lignes de production de feuilles de verre bombées comportant successivement dans le même alignement un four de réchauffage des feuilles de verre, une station de bombage (3), un dispositif d'évacuation des volumes défectueux et une station de refroidissement (4) ; le niveau A des feuilles de verre dans la station de refroidissement (4) étant différent du niveau B des feuilles de verre lors de leur acheminement dans le four.

8. Dispositif d'évacuation de volumes défectueux (21) dans une installation de bombage-trempe en position horizontale, comportant un four de réchauffage des feuilles de verre muni d'un convoyeur (1), une station de bombage (3) et une station de refroidissement (4), les feuilles de verre bombées étant transférées à la station de refroidissement (4) par un dispositif de transport, par exemple du type cadre de trempe, ledit dispositif d'évacuation, situé dans l'axe du four, à l'extrémité de la station de bombage et alimenté par un convoyeur prolongeant le convoyeur du four, étant constitué d'au moins une rampe de pulvérisation (24,25) d'un fluide froid et de moyens de broyage (16).

9. Dispositif d'évacuation de volumes défectueux (21) selon la revendication 8, **caractérisé en ce que** les moyens de broyage sont constitués par un concasseur (16)

10. Dispositif d'évacuation de volumes défectueux (21) selon la revendication 9, **caractérisé en ce que** le concasseur (16) est formé d'un rouleau pourvu de dents (36) mû en rotation.

11. Dispositif d'évacuation de volumes défectueux (21) selon la revendication 8, **caractérisé en ce que** les moyens de broyage sont constitués par des outils de martelage.

12. Dispositif d'évacuation de volumes défectueux (21) selon l'une des revendications 8 à 10., **caractérisé en ce qu**'il comporte deux rampes de pulvérisation (24,25) placées de chaque côté du convoyeur (1).

13. Dispositif selon l'une des revendications 8 à 12, **caractérisé en ce que** les moyens de broyage (26) sont montés sur un équipage mobile destiné à l'éclipser pour la passage des volumes corrects.

14. Dispositif selon l'une des revendications 8 à 13, **caractérisé en ce qu'**une fosse à calcin (18) est prévue sous les moyens de broyage (26).

15. Dispositif selon l'une des revendications 8 à 13, **caractérisé en ce que** le calcin est évacué par un tapis vibreur incliné.

16. Dispositif selon l'une des revendications 8 à 15, **caractérisé en ce qu**'il comporte en outre un carter (17).

17. Dispositif selon l'une des revendications 8 à 16, **caractérisé en ce qu**'il comporte en outre un détecteur (37) de la présence d'un volume défectueux (21) sur le convoyeur (1).

## Patentansprüche

1. Verfahren zum Austragen fehlerhafter Glasscheiben (21), die innerhalb einer Bearbeitung von Glasscheiben erzeugt worden sind, bei der die Glasscheiben erhitzt, in waagerechter Position in eine Biegeanlage (3), wo sie von Biegewerkzeugen aufgenommen werden sollen, transportiert und danach in eine Kühl-, insbesondere Abschreckanlage (4) überführt werden, wobei die fehlerhaften Glasscheiben (21) am Ausgang der Biegeanlage ausgetragen werden, nachdem sie durch Versprühen (34, 35) einer Kühlflüssigkeit mit einem Rißsystem überzogen und anschließend zerkleinert worden sind.

2. Verfahren nach Anspruch 1, **dadurch gekennzeichnet,** daß die Kühlflüssigkeit auf die in Bewegung befindlichen Glasscheiben (21) versprüht wird.

3. Verfahren nach Anspruch 1 oder 2, **dadurch gekennzeichnet,** daß das Versprühen (34,35) auf beiden Seiten der fehlerhaften Glasscheiben (21) durchgeführt wird.

4. Verfahren nach einem der vorhergehenden Ansprüche, **dadurch gekennzeichnet,** daß die Austragmittel für die fehlerhaften Glasscheiben (21) ständig und kontinuierlich arbeiten.

5. Verfahren nach einem der Ansprüche 1 bis 3, **dadurch gekennzeichnet,** daß die Austragmittel für die fehlerhaften Glasscheiben (21) diskontinulerlich und gesteuert von der Feststellung einer fehlerhaften Glasscheibe durch einen Sensor arbeiten.

6. Anwendung des Austragverfahrens nach einem der Ansprüche 1 bis 5 auf Fertigungsstraßen für gebogene Glasscheiben, die geradlinig aufeinander folgend einen Ofen zum Erhitzen der Glasscheiben, eine Biegeanlage (3), eine Austragvorrichtung für fehlerhafte Glasscheiben (21) und eine Kühlanlage (4) enthalten.

7. Anwendung des Austragverfahrens nach einem der Ansprüche 1 bis 5 auf Fertigungsstraßen für gebogene Glasscheiben, die geradlinig aufeinander folgend einen Ofen zum erneuten Erhitzen der Glasscheiben, eine Biegeanlage (3), eine Austragvorrichtung für fehlerhafte Glasscheiben und eine Kühlanlage (4) enthalten, wobei die Ebene A der Glasscheiben in der Kühlanlage (4) von der Ebene B der Glasscheiben während ihres Transports im Ofen verschieden ist.

8. Vorrichtung zum Austragen fehlerhafter Glasscheiben (21) in einer waagerecht arbeitenden Biege- und Abschreckanlage, die einen mit einem Förderer (1) ausgerüsteten Ofen zum Erhitzen der Glasscheiben, eine Biegeanlage (3) und eine Kühlanlage (4) enhält und die gebogenen Glasscheiben zur Kühlanlage (4) durch eine Transporteinrichtung, beispielsweise vom Typ eines Abschreckrahmens, überführt werden, wobei sich diese Austragvorrichtung in Ofenachse am Ausgang der Biegeanlage befindet, von einem Förderer beliefert wird, der den Ofenförderer fortsetzt, und aus wenigstens einer Sprüheinrichtung (24,25) für ein Kühlmittel und Zerkleinerungsmitteln (16) besteht.

9. Vorrichtung zum Austragen fehlerhafter Glasscheiben (21) nach Anspruch 8, **dadurch gekennzeichnet,** daß die Zerkleinerungsmittel aus einem Brecher (16) bestehen.

10. Vorrichtung zum Austragen fehlerhafter Glasscheiben (21) nach Anspruch 9, **dadurch gekennzeichnet,** daß der Brecher (16) aus einer rotlerenden und mit Zähnen (36) versehenen Walze besteht.

11. Vorrichtung zum Austragen fehlerhafter Glasscheiben (21) nach Anspruch 8, **dadurch gekennzeichnet,** daß die Zerkleinerungsmittel aus Hammerwerken bestehen.

12. Vorrichtung zum Austragen fehlerhafter Glasscheiben (21) nach einem der Ansprüche 8 bis 10, **dadurch gekennzeichnet,** daß sie zwei Sprüheinrichtungen (24,25), die an jeder Seite des Förderers (1) angeordnet sind, enthält.

13. Vorrichtung nach einem der Ansprüche 8 bis 12, **dadurch gekennzeichnet,** daß die Zerkleinerungsmittel (26) auf einer beweglichen Baueinheit angebracht sind, die beim Durchgang fehlerfreier Glasscheiben entfernt wird.

14. Vorrichtung nach einem der Ansprüche 8 bis 13, **dadurch gekennzeichnet,** daß unter den Zerkleinerungsmitteln (26) ein Bruchglasbehälter (18) vorhanden ist.

15. Vorrichtung nach einem der Ansprüche 8 bis 13, **dadurch gekennzeichnet,** daß das Bruchglas durch ein geneigtes Rüttelförderband ausgetragen wird.

16. Vorrichtung nach einem der Ansprüche 8 bis 15, **dadurch gekennzeichnet,** daß diese außerdem ein Gehäuse (17) umfaßt.

17. Vorrichtung nach einem der Ansprüche 8 bis 16, **dadurch gekennzeichnet,** daß diese darüber hinaus einen Sensor (37) für das Feststellen einer fehlerhaften Glasscheibe (21) auf dem Förderer (1) enthält.

## Claims

1. Method for the removal of defective objects (21) produced during a treatment of glass sheets, according to which the glass sheets are reheated, brought in a horizontal position into a bending station (3), where they should be taken over by bending tools, are then transported into a cooling station, notably toughening station (4), the defective objects (21) being removed from the end of the bending station after having been cracked by spraying (34, 35) of a cold fluid, and then crushed.

2. Method according to Claim 1, characterized in that the cold fluid is sprayed onto the objects (21) while in motion.

3. Method according to Claim 1 or 2, characterized in that the spraying (34, 35) is performed on both faces of the defective objects (21).

4. Method according to one of the preceding Claims, characterized in that the means for removing the defective objects (21) operate permanently and continuously.

5. Method according to one of Claims 1 to 3, characterized in that the means for removing the defective objects (21) have an intermittent operation, controlled by the detection of the presence of a defective object (21).

6. Application of the method of removal according to one of Claims 1 to 5 to the construction of production lines for curved glass sheets comprising, successively in the same alignment, a furnace for heating the glass sheets, a bending station (3), a removal device for the defective objects (21) and a cooling station (4).

7. Application of the method of removal according to one of Claims 1 to 5 to the construction of production lines for curved glass sheets comprising, successively in the same alignment, a furnace for heating the glass sheets, a bending station (3), a device for the removal of the defective objects and a cooling station (4), the level A of the glass sheets in the cooling station (4) being different from the level B of the glass sheets during their passage through the furnace.

8. Device for the removal of defective objects (21) in a bending-toughening installation operating in the horizontal position, comprising a furnace for heating the glass sheets equipped with a conveyor (1), a bending station (3) and a cooling station (4), the bent glass sheets being transferred to the cooling station (4) by a transportation device, for example of the toughening frame type, said removal device, situated on the axis of the furnace at the end of the bending station and being supplied by a conveyor forming a continuation of the conveyor of the furnace, being constituted of at least one spray nozzle pipe (24, 25) for a cold fluid and crushing means (16).

9. Device for the removal of defective objects (21) according to Claim 8, characterized in that the crushing means are constituted of a breaker (16).

10. Device for the removal of defective objects (21) according to Claim 9, characterized in that the breaker (16) is formed of a roller provided with teeth (36) and driven in rotation.

11. Device for the removal of defective objects (21) according to Claim 8, characterized in that the crushing means are constituted of hammering tools.

12. Device for the removal of defective objects (21) according to one of Claims 8 to 10, characterized in that it comprises two spray nozzle pipes (24, 25) placed on opposite sides of the conveyor (1).

13. Device according to one of Claims 8 to 12, characterized in that the crushing means (26) are mounted on a movable equipment unit intended for moving it away to permit the passage of the correct objects.

14. Device according to one of Claims 8 to 13, characterized in that a scrap glass trough (18) is provided beneath the crushing means (26).

15. Device according to one of Claims 8 to 13, characterized in that the scrap glass is removed by an inclined vibrating conveyor.

16. Device according to one of Claims 8 to 15, characterized in that it comprises, in addition, a casing (17).

17. Device according to one of Claims 8 to 16, characterized in that it comprises, in addition, a detector (37) for the presence of a defective object (21) on the conveyor (1).
